# EUROPÄISCHE PATENTSCHRIFT

(11) **EP 0 993 421 B1**
(45) Veröffentlichungstag und Bekanntmachung des Hinweises auf die Patenterteilung: **04.09.2002**
(21) Anmeldenummer: 98932119.5
(22) Anmeldetag: 04.06.1998
(51) Int. Cl.: C03C 17/02, C03C 1/02

(54) **VERFAHREN ZUR WEITERVERARBEITUNG VON KLEINEN GLASPARTIKELN**
PROCESS FOR THE SUBSEQUENT TREATMENT OF SMALL GLASS PARTICLES
PROCEDE POUR LE TRAITEMENT ULTERIEUR DE PETITES PARTICULES DE VERRE

(30) Priorität: 04.07.1997 DE 19728682; 28.07.1997 DE 19732462; 28.07.1997 DE 19732461; 12.09.1997 DE 19740160; 12.09.1997 DE 19740163; 10.10.1997 DE 19744876
(43) Veröffentlichungstag der Anmeldung: 19.04.2000
(73) Patentinhaber: Starshine Glastechnologie GmbH, 5351 Aigen-Voglhub (AT)
(72) Erfinder: SAUER, Sarolf, 1130 Wien (AT); KLEPSCH, Christian, 5201 Seekirchen b. Salzburg (AT)
(74) Vertreter: Babeluk, Michael, Dipl.-Ing. Mag.
(86) Internationale Anmeldenummer: EP9803349
(87) Internationale Veröffentlichungsnummer: WO99001394

(56) Entgegenhaltungen:
- GB-A- 2 135 987
- CHEMICAL ABSTRACTS, vol. 98, no. 12, 21. März 1983 Columbus, Ohio, US; abstract no. 94510q, Seite 300; XP002081176 & JP 57 166333 A (ASAHI FIBER GLASS) 13. Oktober 1982
- DATABASE WPI Section Ch, Week 8818 Derwent Publications Ltd., London, GB; Class L01, AN 88-124267 XP002081178 & JP 63 069726 A (HAYASHI KK) , 29. März 1988
- CHEMICAL ABSTRACTS, vol. 112, no. 12, 19. März 1990 Columbus, Ohio, US; abstract no. 103584, Y.WANG: "a new way to develop the comprehensive utilisation of waste glass fibers" Seite 305; XP000156879 & HUANJING BAOHU, Bd. 4, 1989, Seiten 22-23, beijin
- CHEMICAL ABSTRACTS, vol. 94, no. 26, 29. Juni 1981 Columbus, Ohio, US; abstract no. 213064b, Seite 280; XP002081177 & JP 80 149142 A (MATSUSHITA ELECTRIC WORKS LTD) 20. November 1980

## Beschreibung

Die vorliegende Erfindung betrifft ein Verfahren zur Weiterverarbeitung von kleinen Glaspartikeln.

In unserer heutigen Industriegesellschaft fallen sehr große Mengen von Altglas an. Aus Umweltüberlegungen heraus erscheint es dabei als wünschenswert, wenn dieses Altglas einer erneuten Verwertung zugeführt werden kann.

In diesem Zusammenhang besteht zwar die Möglichkeit, dass Altglas erneut eingeschmolzen wird, um daraus beispielsweise neue Flaschen herstellen zu können. Als nachteilig erweist sich dabei jedoch der Umstand, dass zur Homogenisierung und Entgasung von Glasschmelzen Temperaturen im Bereich zwischen 1400°C und 1600°C erforderlich sind, so dass das Wiedereinschmelzen von Altglas nur mit einem sehr hohen Energieaufwand durchführbar ist.

Im Rahmen einer erneuten Verwendung von Altglas stehen vor allem kleine Glaspartikel in Form von Altglas-Granulat sowie daraus geformte kugelförmige Glasperlen zur Verfügung. Die Körnung dieser Glaspartikel kann dabei durch Siebung sehr genau eingestellt werden.

Ein Artikel in CHEMICAL ABSTRACTS, vol.94, no.26, 29. Juni 1981, abstr.no.21306b beschreibt eine mit Email beschichtete Hohlkugel. Eine Altglasaufbereitung ist jedoch gemäß dieser Druckschrift nicht möglich. Weiters zeigt DATABASE WPI Sektion CH, week 8818, Derwent Puvbl. London GB, AN 88-124267 die Herstellung von dekorativem Glas aus gepressten Glasmehl, bei der jedoch die oben beschriebenen Nachteile auftreten. Ferner beschreibt CHEMICAL ABSTRACTS vol.112, no.12, 19. März 1990, abstr.no. 103584 die Herstellung von Mosaikglas unter Verwendung von gemahlenen Glasfasern. Die Verwendung von Altglas ist bei einem solchen Verfahren ebenfalls nicht möglich.

Es ist die Aufgabe der vorliegenden Erfindung, ein Verfahren zu schaffen, mit welchem eine Weiterverarbeitung von derartigen Glaspartikeln mit relativ geringem Energieaufwand und unter Einsatz einfacher technischer Hilfsmittel möglich ist, wobei neuartige Produkte entstehen, welche sehr vielseitig im industriellen Bereich einsetzbar sind.

Erfindungsgemäß wird dies durch Einsatz der in Anspruch 1 aufgeführten Verfahrensschritte erreicht.

Vorteilhafte Weiterbildungen der Erfindung ergeben sind anhand der Unteransprüche.

Weiters betrifft die Erfindung ein Verfahren zur Weiterbehandlung von kleinen Glaspartikeln gemäß Anspruch 10.

Im Rahmen der Erfindung werden die Oberflächen der vorhandenen Glaspartikel in Kontakt mit einem niedrigschmelzenden Silicatfluss oder Email gebracht, worauf bei relativ niedrigen Temperaturen um 600°C demzufolge unter geringem Energieaufwand eine Wärmebehandlung vorgenommen wird, bei der der niedrigschmelzende Silicatfluss oder Email zum Schmelzen gelangt. Durch diese Maßnahme lassen sich im Grunde drei verschiedene Dinge erreichen:
1) Eine sehr preiswerte Farbbeschichtung der vorhandenen Glaspartikel im Fall von Glasperlen oder Glasgranulaten.
2) Eine sehr preiswerte Verbindung von einer Lage Glaspartikel auf einer beliebigen Trägerschicht, was In Verbindung mit Flachgläsern, Keramikfliesen, Metalloberflächen, Glasfolien und/oder Keramikfasergewebe die Herstellung stark lichtreflektierender Oberflächen erlaubt.
3) Eine sehr preiswerte Verbindung der Glaspartikel untereinander, was die Herstellung von porösen Glasbausteinen, Thermoisoliergläsern, Fassadenelementen und dergleichen zulässt.

Weitere Einzelheiten der Erfindung ergeben sich anhand der folgenden Beschreibung.

### 1. Herstellung einer Farbbeschichtung auf Glasperlen oder Glasgranulat

Als Ausgangsmaterialien werden nichteingefärbte Glasperlen oder gesiebtes Glasgranulat verwendet, so wie derartige Teilchen von der Industrie zu sehr niedrigen Preisen zur Verfügung gestellt werden. Diese Glasperlen mit Durchmessern im Bereich zwischen 0,1 und 2,3 mm oder Glasgranulate mit einer Korngröße zwischen 0,3 und 4 mm werden in der Folge mit einem Vernetzungsmittel in Form eines leicht vergasenden Siebdrucköls, einer sowohl Borsäure als auch Fluorsalze enthaltenden Flüssigkeit oder Mischungen derselben benetzt. Während mit Hilfe des leicht vergasenden Siebdrucköls allein eine Oberflächenbenetzung zustande kommt, wird durch die sowohl Borsäure als auch Fluorsalze enthaltende Flüssigkeit bei gleichzeitiger Wärmeeinwirkung eine Oberflächenerweichung der Glasperlen bzw. Glasgranulate erreicht, so daß durch geeignete Einstellung des Verhältnisses zwischen dem Siebdrucköl und der sowohl Borsäure als auch Fluorsalze enthaltenden Flüssigkeit eine beliebige Einstellbarkeit der Dicke der herzustellenden Farbbeschichtung erreicht werden kann.

Im Anschluß daran werden die oberflächlich bearbeiteten Glasteilchen in einem niedrigschmelzenden Email- oder Glasflußfarben gleichmäßig beschichtet, wobei die Zufuhr derselben in Pulverform erfolgt. Auf diese Weise kann dann auf den Glasperlen bzw. Glasgranulaten eine Farbschicht aufgebracht werden, deren Gewichtsanteil im allgemeinen im Bereich zwischen 2 und 9 Gew.-%, vorzugsweise im Bereich zwischen 3 und 5 Gew.-% liegt.

Die auf den Glasteilchen aufgebrachte Farbschicht kann nunmehr auf zweierlei Weise eingebrannt werden. In dem einen Fall werden die beschichteten Glasteilchen über eine aus Nirostastahlblechen bestehende schiefe Ebene zum Abrollen gebracht, wobei diese Nirostastahlbleche zum Schutz mit einer Bornitritbeschichtung versehen sind. Dabei durchlaufen die abrollenden Glasteilchen eine Thermozone mit Temperaturen im Bereich zwischen 540 und 800°C, vorzugsweise im Bereich zwischen 560 und 660°C, was ein Einbrennen der aufgetragenen Farbschicht auf und in den Oberflächen der Glasteilchen bewirkt.

Alternativ können die mit einer Farbschicht versehenen Glasteilchen ebenfalls in eine nicht damit verklebende Form, beispielsweise eine Keramikfaserform oder eine aus feuerfesten Blechen bestehende Form, mit einer Schichtdicke von maximal 6 cm eingebracht werden. Die mit den Glasteilchen gefüllten Formen werden dann in einen Ofen eingebracht, worauf die auf den Glasteilchen befindliche Farbschicht bei einer Hitze im Bereich zwischen 540 und 800°C, vorzugsweise im Bereich zwischen 560 und 660°C, eingebrannt wird. Dabei ergeben sich jedoch nur punktweise Verbindungen der in den jeweiligen Formen eingebrachten Glasteilchen untereinander, welche somit nach der Abkühlung sehr leicht innerhalb einer entsprechenden Mühle, einem Zerreibgerät oder unter Einsatz von Hartgummi- oder Hartholzwalzen zerrieben und in voneinander getrennte Farbglasteilchen vereinzelt werden können.

Da im Rahmen der Erfindung nicht die gesamten Glasteilchen in Form von Glasperlen oder Glasgranulaten, sondern allein eine dünne Außenschicht farbig eingefärbt wird, lassen sich auf diese Weise eingefärbte Glasteilchen zu sehr niedrigen Kosten herstellen, weil nur relativ geringe Mengen an teuren Farbglaszusätzen in Form von Seltenen Erden und dgl. benötigt werden. Das beschriebene Verfahren erlaubt somit dabei eine leichte, schnelle und äußerst vielfältige Farbgebung der Glaspartikel, weil die verschiedensten Farbmischungen, so wie sie von Firmen wie Hereus und Degusa für die Keramik- und Glasveredelungsindustrie geliefert werden, zum Einsatz gebracht werden können. Im Rahmen von Mischvorgängen können somit beliebige Farbnuancen sowohl bei kleinen wie auchgroßen Mengen wahlweise bei Glasperlen oder auch bei Glasgranulat eingestellt werden.

Das im Rahmen der Erfindung vorgenommene Einbrennen von Metalloxidfarben auf der Oberfläche von Glasteilchen kann wahlweise in einer oxidierenden oder reduzierenden Atmosphäre vorgenommen werden, wobei sich entweder Transparentfarben oder metallische Oberflächen ergeben. Letztere sind dabei für eine gewünschte Wärme- oder Lichtreflexion von Bedeutung, wobei zu erwähnen ist, daß bei einer reduzierenden Atmosphäre auf eine besondere Metallbedampfung verzichtet werden kann.

Im Fall des Einsatzes von Kupferoxidfarben ergeben sich in einer oxidierenden Atmosphäre Blau- und Grünfarben, während in einer reduzierenden Atmosphäre Gelb- und Rotfarben zustandekommen. Bei Verwendung von Wismutoxidfarben ergeben sich hingegen in einer oxidierenden Atmosphäre silbrige Farben, während in einer reduzierenden Atmosphäre Zintronengelb- bzw. Goldfarben zustandekommen. Schließlich können bei Einsatz von Silberoxidfarben und Salzen im Fall einer oxidierenden Atmosphäre silbrige Oberflächen erzielt werden, während in einer reduzierenden Atmosphäre Gelb- bzw. Zitronenfarben zustandekommen.

Im Rahmen des erfindungsgemäßen Verfahrens kann mit einer farbigen Außenschicht versehenes Farbglasgranulat entweder als Ausgangsmaterial für Päte-de-Verre-Arbeiten eingesetzt werden oder es kann ein anschließender Umformungsvorgang durchgeführt werden, bei welchem aus beschichtetem Farbglasgranulat farbige Farbglasperlen hergestellt werden. Die Umformung der Glasperlen aus ursprünglich farblosen Glasgranulat kann somit wahlweise vor oder nach dem Aufbringen einer äußeren Farbschicht erfolgen.

### 2. Aufbringung von einer Lage von Glasperlen oder Farbglasgranulat auf der Oberfläche eines Trägermaterials

Als Ausgangsmaterial kann in diesem Fall ein beliebiges Trägermaterial beispielsweise in Form von bereits gebrannten oder glasierten Porzellan-, Steinzeug- oder Keramikfliesen, Glasplatten oder Glasfolien bzw. aus derartigen Materialien geformte Körper verwendet werden. Bei derartigen Körpern kann es sich beispielsweise auch um glasierte Ziegelsteine, Keramikelemente, Mosaiksteinchen, Gefäße oder Vasen oder beliebige andere Körper dieser Art handeln.

Auf diesem Trägermaterial wird nunmehr im Rahmen der Erfindung entweder mittels Pinselauftrag, einem Siebdruckverfahren, durch Aufspritzen oder durch Aufwalzen eine dünne Schicht aus einem niedrigschmelzenden Silicatfluß oder Email aufgetraten. Da diese Materialien in der Regel pulverförmig sind, sollten dieselben mit einem flüssigen Vernetzungsmittel, beispielsweise in Form eines leicht vergasenden Siebdrucköls vermischt sein, so daß sich auf diese Weise eine auftragfähige viskose Masse ergibt. Der niedrigschrnelzende Glasfluß ist dabei derart gewählt, daß seine Schmelztemperatur unterhalb des Temperaturbereiches zwischen 540 und 800°C, vorzugsweise unterhalb des Temperaturbereiches zwischen 560 und 660°C liegt. Dabei kann es sich beispielsweise um ein Bleiborsilicat, ein Natriumborsilicat, ein Fluorborsilicat oder um besondere Mischungen derartiger Stoffe handeln.

Das mit diesem niedrigschmelzenden Glasfluß beschichtete Trägermaterial wird in der Folge mit einer einlagigen Schicht aus kleinen Glasperlen oder Glasgranulat versehen, wobei der Durchmesser dieser Glasteilchen im Bereich zwischen 0,3 und 4 mm, bzw. 0,1 und 2,3 mm liegt. Der Auftrag dieser Glasteilchen kann dabei entweder durch Eintauchen in eine mit Glasteilchen gefüllten Behälter oder im Rahmen eines in Schräglage durchgeführten Berieselungsvorgangs erfolgen, bei welchem überschüssige Glasteilchen zum Abrollen gelangen. Das mit einer Lage von Glasteilchen beschichtete Trägermaterial wird in der Folge in einem entsprechenden Ofen eingebracht und auf eine Temperatur im Bereich zwischen 540 und 800°C, vorzugsweise im Bereich zwischen 560 und 660°C erwärmt, wobei der niedrigschmelzende Glasfluß zum Schmelzen gebracht wird. Dabei kann es sich vorzugsweise um einen Tunnelofen handeln, durch welchen das beschichtete Trägermaterial mittels einer Fördereinrichtung kontinuierlich hindurchgeleitet wird.

Nach dem Abkühlungsvorgang ergibt sich auf diese Weise eine sehr feste Verbindung zwischen dem Trägermaterial und den aufgebrachten Glasteilchen. Die Dicke der aufgetragenen Glasflußschicht sollte dabei derart gewählt sein, daß nach dem Schmelzvorgang die aufgetragenen Glasteilchen im Bereich zwischen einem Drittel und der Hälfte des Durchmessers in der Schicht des niedrigschmelzenden Glasflusses eingebettet sind.

Zur Erzielung besonderer optischer Effekte können wahlweise der niedrigschmelzende Glasfluß oder die Glasteilchen in gewünschten Farben eingefärbt sein. Im Hinblick auf den Auftrag unterschiedlich eingefärbter Glasteilchen können ferner entsprechend ausgebildete Schablonen zum Einsatz gelangen.

In entsprechender Weise können auch metallische Oberflächen mit einer Schicht aus eingefärbten oder nicht eingefärbten Glasteilchen versehen werden. Insbesondere kleine Glasperlen haben dabei die Eigenschaft, daß sie stark lichtreflektierend wirken, so daß auf diese Weise lichtreflektierende Oberflächen erzeugt werden. Dabei bieten sich beispielsweise Karrosserieoberflächen von Kraftfahrzeugen an, wodurch zu erreichen ist, daß derartige Fahrzeuge auch unter schlechten Sichtverhältnissen beispielsweise im Nebel besser zu erkennen sind. Dasselbe gilt natürlich auch für beliebige andere Fahrzeuge, wie Schiffe oder Flugzeuge, deren Oberflächen u.U. durch die körnige Struktur der Glasperlen derart zu beeinflussen ist, daß sich ein reduzierter Reibungswiderstand innerhalb fluider Medien ergibt. Auch bei stationär angeordneten metallischen Oberflächen, beispielsweise metallischen Außenfassaden von Hochhäusern oder bei Leitplanken auf Autobahnen kann es sich als zweckmäßig erweisen, wenn dieselben mit lichtreflektierenden Oberflächen versehen sind.

Als Trägerschicht eignet sich im Rahmen der Erfindung auch ein Keramikfasergewebe, bei welchem die Kett- und Schußfäden vorzugsweise gegenseitig verkettelt sind. Auf diese Weise ergibt sich ein sehr strapazierfähiges Verkleidungs- oder auch Zeltbaugewebe, welches aufgrund seiner Feuerbeständigkeit und guten Reflexionseigenschaften gegenüber starker äußerer Sonneneinstrahlung besonders für den Einsatz in tropischen und subtropischen Gegenden sehr geeignet erscheint. Derartige lichtreflektierende Gewebe können dabei auch zur Abhängung von Zimmerdecken oder als Theatervorhänge zum Einsatz gelangen.

### 3. Verbindung einer großen Menge von kleinen Glaspartikeln untereinander

Als Ausgangsmaterial für die Herstellung von porösen Glasbausteinen können entweder Glasperlen oder Glasgranulate verwendet werden. Bei den Glasgranulaten handelt es sich vorzugsweise um Granulate, so wie sie durch mechanisches Zerbrechen von Altglas gebildet werden, wobei sich mit Hilfe einer Siebung Glasteilchen mit möglichst gleichmäßiger Korngröße ergeben. In dem vorliegenden Fall gelangen dabei Glasgranulate zum Einsatz, welche eine gleichmäßige Körnung im Bereich zwischen 0,3 und 4 mm aufweisen. Bei Glasperlen handelt es sich hingegen um kugelförmige Glaselemente, welche einen möglichst gleichförmigen Durchmesser im Bereich zwischen 0,1 und 2,3 mm aufweisen.

Die zur Herstellung des jeweiligen Glasbausteins zu verwendenden Glaspartikel werden innerhalb einer geeigneten Mischvorrichtung mit einem rückstandlos vergasenden Haftmittel, beispielsweise einem Kristalleiskleber 33 der Firma Hereus, gleichmäßig benetzt. Es können jedoch ebenfalls eine wäßrige Fluomatriumborsäure-Lösung oder ein Glasurbindemittel aus Cellulose-Derivaten oder hydrophile rückstandslos ausbrennende Siebdruckmedien zu diesem Zweck eingesetzt werden.

Im Anschluß daran werden 2 bis 9 Gew.-%, vorzugsweise 3 bis 5 Gew.-% eines niedrigschmelzenden Silicatflusses oder Emails in Pulverform zugesetzt, wobei dieser Glasfluß beispielsweise aus Bleiborsilicat, Natriumborsilicat, Fluorborsilicat oder Mischungen derselben besteht. Innerhalb einer Mischvorrichtung wird dieser Mischvorgang so lange fortgesetzt, bis die Glaspartikel gleichmäßig mit diesem niedrigschmelzenden Silicatfluß bzw. Email beschichtet sind.

Die auf diese Weise hergestellte formbare Masse wird dann zur Reliefplatten, Glasbausteinen, Wandverkleidungen, Fassadenelementen und dgl. geformt und innerhalb eines entsprechenden Ofens, vorzugsweise Tunnelofens auf eine Temperatur im Bereich zwischen 540 und 800°C, vorzugsweise im Bereich zwischen 560 und 660°C erwärmt. Dabei wird der niedrigschmelzende Silicatfluß bzw. Email zum Schmelzen gebracht, so daß nach der Auskühlung zwischen den einzelnen Glaspartikeln Brücken entstehen, welche dem jeweiligen Glasbauelement die erforderliche mechanische Festigkeit verleihen. Die gebildeten Kontaktbrücken besitzen dabei eine ausreichende Elastizität, so daß selbst Glaspartikel mit unterschiedlichen thermischen Ausdehungskoeffizienten miteinander verbunden werden können, ohne daß innerhalb des Glasbauelements bei Temperaturschwankungen, Abkühlungsprozessen und dgl. Sprünge entstehen. Trotz unterschiedlicher thermischer Ausdehnungskoeffizienten der verwendeten Glaspartikel können somit auf diese Weise Glasbausteine hergestellt werden, welche im wesentlichen spannungsfrei sind. Da bei derartigen Verbundmaterialien die gegenseitigen Berührflächen zwischen den Glaspartikeln Durchmesser aufweisen, welche zwangsläufig unterhalb von 0,6 mm liegen müssen, wird auf diese Weise die Thermoschockgrenze des Glases unterschritten, so daß temperaturbedingte Brüche nicht auftreten. Verbleibende Restspannungen werden hingegen über die vorhandene Wärmeleitung zum Abbau gebracht.

Da die einzelnen Glaspartikel nur im Bereich ihrer gegenseitigen Berührpunkte miteinander verbunden werden, entsteht auf diese Weise ein Glasbaustein, welcher bei niedrigem Gewicht eine relativ hohe Porosität besitzt. Bei Verwendung von Glasperlen als Ausgangsmaterial ergeben sich dabei Glasbausteine mit einem spezifischen Gewicht von etwa 1,35, während bei Verwendung von Glasgranulat Glasbausteine entstehen, deren spezifisches Gewicht bei etwa 1,25 liegt.

Im Vergleich zu Glasbausteinen aus Glasgranulat unterscheiden sich Glasbausteine aus Glasperlen dadurch, daß wegen der genau vorgegebenen Glasperlengröße sowohl die Porengröße als auch die Porendichte sehr genau einstallbar sind. Darüber hinaus bewirken die innerhalb des jeweiligen Glasbausteins, insbesondere im Oberflächenbereich vorhandenen Glasperlen eine starke Lichtreflexion des einfallenden Lichtes, so daß derartige Glasblausteine als dekorative Wandelemente besonders gut geeignet sind. Im Gegensatz dazu zeigen aus Glasgranulat hergestellte Glasbausteine einen schwachglizernden Effekt, welcher durch die unterschiedlichen Lichtreflexionen an den angeschmolzenen Ecken, Kanten und Flächen des verwendeten Glasgranulats hervorgerufen wird.

Bei Verwendung von optisch transparenten Glasteilchen sowie eines ebenfalls transparenten niedrigschmelzenden Silicatflusses ergeben sich Glasbauelemente, welche bei einer Dicke von etwa 5 cm eine Lichtdurchlässigkeit von noch etwa 10 % besitzen.

Farbig eingefärbte Glasbausteine können hingegen entweder durch farbig eingefärbte Glasteilchen oder durch einen entsprechend eingefärbten Glasfluß erzeugt werden. Dabei erscheint es einleuchtend, daß eine Einfärbung des Silicatflusses bzw. Email aufgrund des sehr viel geringeren Mengen die preiswertere Lösung darstellt.

Die im Rahmen der vorliegenden Erfindung hergestellten Glasbauelemente besitzen dabei die folgenden Vorteile:
1. Im Vergleich zu anderen Glasverbundelementen weisen dieselben aufgrund der vorhandenen Poren ein relativ niedriges spezifisches Gewicht auf.
2. Je nach der Wahl der verwendeten Glasteilchen kann die Porosität des erfindungsgemäßen Glasbausteins unterschiedlich eingestellt werden, so daß auf diese Weise eine gewissen Atmungsfähigkeit zu erreichen ist.
3. Zur Erzielung unterschiedlicher Farbgebungen können die verschiedensten Arten von Glasteilchen zum Einsatz gelangen, ohne daß sich aufgrund unterschiedlicher thermischer Ausdehnungskoeffizienten Spannungsprobleme ergeben.
4. Im Vergleich zu Vollglaselementen erweisen sich die erfindungsgemäßen Glasbausteine als weitgehend thermoschockunempfindlich. Die betreffenden Glasbausteine weisen dabei eine hohe thermische Standfestigkeit auf, gemäß welcher die Oberflächen der Glasbausteine bis über 800°C erhitzt werden können. Aufgrund der eingeschmolzenen Luftblasen wird dabei ein zu rasches Zusammenschmelzen der innerhalb der Glasbausteine vorhandenen Glasteilchen verhindert, auch wenn durch die Hitzeeinwirkung ein Zusammenschmelzen der Oberflächen der Glasteilchen stattfindet. Falls dem Glasbaustein zusätzlich noch Monoaluminiumphosphat oder Ammonium- bzw. Borkaliverbindungen zugesetzt werden, entwickeln sich innerhalb des Glasbausteines Stickstoff- oder Blähschäume, welche über Stunden hinweg eine Zerstörung durch Feuer verhindern.
5. Die erfindungsgemäßen Glasbausteine sind fernerhin bedingt statisch belastbar, wobei sie in ihrem Aufbau Konglomeratgesteinen ähneln. Die statische Belastbarkeit kann dabei noch dadurch erhöht werden, indem die Verbindungsbrücken unter Einsatz von Fluornatriumborsilicaten aufgebaut werden. Eine Erhöhung der statischen Belastbarkeit ergibt sich jedoch auch durch Einsatz von Glaspartikelgemischen gleicher Glaszusammensetzung oder bei Verwendung von Glaspartikeln mit stark unterschiedlicher Korngröße. Bei einer ungleichmäßigen Belastung wird dabei ein weitgehender Belastungsausgleich über die vorhandenen Kontaktbrücken zwischen den einzelnen Glasteilchen erreicht.
6. Die erfindungsgemäßen Glasbausteine können aus den verschiedensten Altglasabflällen hergestellt werden, und benötigen dabei nur Zusatzstoffe in Mengen zwischen 2 und 9 Gew.-%, vorzugsweise 3 und 5 Gew.-%, so daß derartige Glasbausteine sehr preiswert herstellbar sind.
7. Im Vergleich zu neu eingeschmolzenen Glas können die erfindungsgemäßen Glasbausteine ferner mit sehr geringem Energieaufwand hergestellt werden. Die Zusammenbackzeit von bis zu 60 mm starken Platten beträgt dabei nur etwa 30 min, während die Abkühlphase unter Einsatz einer Kapselkühlung ohne Energiezufuhr oder durch Auflegen von Keramikfasermatten innerhalb von 90 min durchführbar ist.
8. Die sich ergebende Lichtdurchlässigkeit der erfindungsgemäßen Glasbausteine verringert sich durch das Zusammenschmelzen der Glaspartikel mit zunehmender Wandstärke und Farbintensität. Bei Temperaturen von 750°C kann sich die Lichtdurchlässigkeit jedoch wieder erhöhen, wobei sich dann allerdings durch eine Gesamtsinterung des Gemenges die Eigenschaften des Glasbauelementes verändern. Auf diese Weise entsteht dann ein in sich geschlossenes Glasbauelement mit vorhandenen Lufteinschlüssen und erhöhten inneren Spannungen.

Die erfindungsgemäßen Glasbauelemente können als Platten, Reliefplatten, Glasbausteine, Wandverkleidungen, Fassadenelemente, Ziergegenstände und viele andere Anwendungen eingesetzt werden. Die Herstellung der Glasbauelemente kann dabei sehr preiswert erfolgen, wobei bei Verwendung von Altglasgranulat Herstellungskosten von etwa DM 650,00 pro Tonne entstehen.

Falls die aus Glaspartikeln, niedrigschmelzenden Glasfluß und den flüssigen Benetzungsmittel bestehende teigige Masse vor dem Brennvorgang in den Zwischenraum zwischen zwei Flachglasplatten eingebracht wird und anschließend die Wärmebehandlung erfolgt, lassen sich auf diese Weise auch sehr wirksame thermoisolierende Scheiben erstellen.

## Patentansprüche

1. Glasperlen oder Farbglasgranulat mit einer nicht eingefärbten Glasperle aus Altglas mit einem Durchmesser zwischen 0,1 und 2,3 mm oder einem Altglasgranulatteilchen mit einem Durchmesser zwischen 0,3 und 4mm im Inneren, deren bzw. dessen Oberfläche mit einem Vernetzungsmittel in Form eines leicht vergasenden Siebdrucköls benetzt ist, wobei auf der durch Wärmeeinfluß erweichten Oberfläche eine Schicht aus niedrig schmelzenden Emaile- oder Glasflussfarben vorgesehen ist, deren Gewichtsanteil zwischen 2 bis 9%, vorzugsweise zwischen 3 und 5% beträgt, und die bei Temperaturen zwischen 540 bis 800°C eingebrannt ist.

2. Glasperlen nach Anspruch 1, **dadurch gekennzeichnet, daß** die Schicht auf der Oberfläche der Glasteilchen bzw. Glasperlen im Inneren der fertigen Glasperlen in beliebiger Farbe, insbesondere auch mit Metalloxidfarben eingefärbt sind.

3. Glasperlen nach Anspruch 1 oder 2, **dadurch gekennzeichnet, daß** deren Körnung bzw. Korngrößen in einheitlicher Klassierung oder in einem bestimmten, gegebenenfalls engeren Korngrößenbereich vorliegen.

4. Glasperlen, nach Anspruch 1 bis 3, **dadurch gekennzeichnet, daß** sie miteinander verbunden (z.B. versintert oder verklebt) sind.

5. Glasperlen nach Anspruch 4, dadurch gekennzeinet, daß die Glasperlen zu dickeren Gegenständen, z.B. Platten miteinander verbunden (z.B. versintert oder verklebt) sind.

6. Verwendung der Glasperlen nach einem der Ansprüche 1 bis 3, **dadurch gekennzeichnet, daß** sie auf die Oberfläche eines Trägers aufgetragen sind.

7. Verwendung der Glasperlen nach einem der vorhergehenden Ansprüche in miteinander verbundenen Schichten aus abwechselnd miteinander verbundenen (versintert oder verklebt) Glasperlen und dazwischen bzw. auf deren ein- oder beidseitigen Oberflächen angebrachten Trägerschichten auch aus metallischem oder keramischem oder lichtreflektierendem Material.

8. Verwendung der Glasperlen nach Anspruch 7, **dadurch gekennzeichnet, daß** die Schichten porös aufgebaut sind.

9. Verwendung der Glasperlen nach Anspruch 6 bis 8, **dadurch gekennzeichnet, daß** die Trägerschichten aus Dünnstglas mit einer Docke von 0,05 bis 0,75 mm bestehen.

10. Verfahren zu Weiterverarbeitung von kleinen Glaspartikeln, beispielsweise in Form von Altglasgranulat mit einer Korngröße im Bereich zwischen 0,3 und 4 mm oder Glasperlen im Durchmesser im Bereich zwischen 0,1 und 2,3 mm, **dadurch gekennzeichnet, dass** die mit einem Vernetzungsmittel, vorzugsweise in Form eines leicht vergasenden Siebdrucköls, benetzten Oberflächen der Glaspartikel mit einem niedrig schmelzenden Silicatfluss oder Email, beispielsweise aus Bleiborsilicat, Natriumborsilicat, Fluorborsilicat oder Mischungen derselben in Mengen von 2 bis 9 Gew. %, vorzugsweise 3 bis 5 Gew. % in Berührung gebracht werden und dass in der Folge die Glaspartikel einer Wärmebehandlung im Bereich zwischen 540°C und 800°C, vorzugsweise im Bereich zwischen 560°C und 660°C ausgesetzt werden, bei welcher der niedrigschmelzende Silicatfluss oder Email auf den Oberflächen der Glaspartikel zum Aufschmelzen gelangt.

11. Verfahren nach Anspruch 10, **dadurch gekennzeichnet, daß** die Oberflächen der Glaspartikel vor ihrer Kontaktierung mit dem Silicatfluß oder Email zuvor mit einem Vernetzungsmittel in Form eines rückstandslos vergasenden Siebdrucköls, einer sowohl Borsäure als auch Fluorsalze enthaltenen Flüssigkeit und/oder Mischungen derselben behandelt werden.

12. Verfahren nach Anspruch 10 oder 11, **dadurch gekennzeichnet, daß** der niedrigschmelzende Silicatfluß oder Email Farbpigmente enthält, so daß im Anschluß an eine Wärmebehandlung und eines eventuell noch erforderlichen Vereinzelungsvorgangs durch Zerreiben oder Mahlen kleine Glaspartikel in Form von Glasgranulat oder Glasperlen mit einer außen aufgebrannten Farbschicht gebildet werden.

13. Verfahren nach Anspruch 12, **dadurch gekennzeichnet, daß** die Wärmebehandlung wahlweise in einer oxidierenden oder reduzierenden Ofenatmosphäre durchgeführt wird.

14. Verfahren nach einem der Ansprüche 10 und 13, **dadurch gekennzeichnet, daß** die Schicht aus einem niedrig schmelzenden Silicatfluß oder Email auf einer oder beiden Oberflächen einen flächigen Materials aufgetragen wird, daß in der Folge eine Lage von wahlweise eingefärbten oder nicht eingefärbten Glaspartikeln im Rahmen eines Aufsprühvorgangs auf eine oder beide benetzten Oberflächen des flächigen Trägermaterials aufgetragen wird, und daß im Anschluß an einen vorgenommenen Walzvorgang eine Wärmebehandlung vorgenommen wird, bei welcher es zu der Ausbidlung von festhaftenden Verbindungsbrücken zwischen den Glaspartikeln untereinader und der Oberfläche des flächigen Trägermaterials kommt.

15. Verfahren nach Anspruch 14, **dadurch gekennzeichnet, daß** das flächige Trägermaterial wahlweise ein dünnes Flachglas oder eine biegsame Glasfolie ist.

16. Verfahren nach Anspruch 14, **dadurch gekennzeichnet, daß** das flächige Trägermaterial in Form von Keramikfliesen ausgebildet ist.

17. Verfahren nach Anspruch 14, **dadurch gekennzeichnet, daß** das flächige Trägermaterial durch großflächige Metalloberflächen von Landfahrzeugkarosserien oder Oberflächen von Schiffsrümpfen oder Flugzeugen gebildet wird.

18. Verfahren nach Anspruch 14, **dadurch gekennzeichnet, daß** das flächige Trägermaterial ein feuerfesten Gewebe vorzugsweise in Form einen verkettelten Glasfaser- und Keramikfasergewebes ist.

19. Verfahren nach einem der Ansprüche 10 bis 13, **dadurch gekennzeichnet, daß** die Beschichtung von eingefärbten oder nicht eingefärbten Glasperlen mit einem niedrigschmelzenden Silicatfluß oder Email innerhalb einer Mischvorrichtung vorgenommen wird, worauf die dadurch hergestellte teigige Masse in entsprechende Formen eingebracht wird, wodurch nach der Durchführung einer Wärmebehandlung poröse Glaselemente in Form von flachen Platten, Reliefplatten, Glasbausteine, Wandverkleidungen, Fassadenelementen und dgl. gebildet werden.

20. Verfahren nach einem der Ansprüche 10 bis 13, **dadurch gekennzeichnet, daß** die Beschichtung der Glaspartikel mit einem niedrigschmelzenden Silicatfluß oder Email innerhalb einer Mischvorrichtung vorgenommen wird, worauf die dadurch hergestellte Masse in einen Hohlraum zwischen zwei Flachglasplatten oder Glasfolien eingebracht wird, wodurch nach der Durchführung einer Wärmebehandlung thermoisolierende Glasscheiben gebildet werden.

## Claims

1. Glass beads or stained glass granulates with a non-dyed glass bead made of waste glass with a diameter of between 0.1 and 2.3 mm or a waste glass granulate particle with a diameter of between 0.3 and 4 mm in the interior, whose surface is wetted with a cross-linking agent in form of an easily gasifying silk-screen oil, with a layer made of low-melting enamel or glass flux dyes being provided on the surface softened under the influence of heat, whose share by weight is between 2 to 9%, preferably between 3 and 5%, and which is baked at temperatures of between 540 to 800°C.

2. Glass beads as claimed in claim 1, **characterised in that** the layer on the surface of the glass particles or glass beads are dyed in the interior of the finished glass beads in any desired colour, especially also with metal oxide dyes.

3. Glass beads as claimed in claim 1 or 2, **characterised in that** their granulation or grain sizes are present in uniform classification or in a specific, optionally narrower grain size range.

4. Glass beads as claimed in claim 1 to 3, **characterised in that** they are mutually connected (e.g. sintered or glued).

5. Glass beads as claimed in claim 4, **characterised in that** the glass beads are joined (e.g. sintered or glued) into thicker objects such as slabs for example.

6. Use of the glass beads as claimed in one of the claims 1 to 3, **characterised in that** they are applied onto the surface of a carrier.

7. Use of the glass beads as claimed in one of the preceding claims in mutually linked layers of alternatingly mutually linked (sintered or glued) glass beads and also of metallic or ceramic or light-reflecting material in between or on carrier layers attached to one or both of its surfaces.

8. Use of the glass beads as claimed in claim 7, **characterised in that** the layers are structured in a porous way.

9. Use of the glass beads as claimed in claims 6 to 8, **characterised in that** the carrier layers consist of extremely thin glass with a thickness of 0.05 to 0.75 mm.

10. A method for further processing small glass particles, e.g. in form of waste glass granulate with a grain size in the range of 0.3 and 4 mm or glass beads in the diameter in the range of between 0.1 and 2.3 mm, **characterised in that** the surfaces of the glass particles, which are wetted with a cross-linking agent preferably in form of an easily gasifying silk-screen oil, are brought into contact with a low-melting silicate flux or enamel, e.g. made of lead borosilicate, sodium borosilicate, fluoroborosilicate or mixtures thereof in quantities of 2 to 9 % by weight, preferably 3 to 5% by weight, and that subsequently the glass particles are subjected to a heat treatment in the range of between 540°C and 800°C, preferably in the range of between 560°C and 660°C, in which the low-melting silicate flux or enamel comes to melt on the surfaces of the glass particles.

11. A method as claimed in claim 10, **characterised in that** the surfaces of the glass particles, prior to their making contact with the silicate flux or the enamel, are treated before with a cross-linking agent in form of a silk-screen oil gasifying in a residue-free way as well as a liquid containing boric acid as well as fluorides and/or mixtures thereof.

12. A method as claimed in claim 10 or 11, **characterised in that** the low-melting silicate flux or enamel contains colouring pigments, so that after a heat treatment and a possibly required singularisation process by crushing or grinding small glass particles are formed in form of glass granulate or glass beads with an outwardly baked colour layer.

13. A method as claimed in claim 12, **characterised in that** the heat treatment is optionally performed in an oxidising or reducing furnace atmosphere.

14. A method as claimed in one of the claims 10 and 13, **characterised in that** the layer of a low-melting silicate flux or enamel is applied onto one or both surfaces of a planar material, that thereafter a layer of optionally dyed or non-dyed glass particles is applied within the scope of a spraying process onto one or both of the wetted surfaces of the planar carrier material, and that thereafter a heat treatment is performed in a performed rolling process in which the formation of fixedly adhering connecting bridges occurs between the glass particles among each other and the surface of the planar carrier materials.

15. A method as claimed in claim 14, **characterised in that** the planar carrier material is optionally a thin flat glass or a flexible glass film.

16. A method as claimed in claim 14, **characterised in that** the planar carrier material is arranged in form of ceramic tiles.

17. A method as claimed in claim 14, **characterised in that** the planar carrier material is formed by large-surface metal surfaces of land vehicle bodies or surfaces of ship's hulls or aeroplanes.

18. A method as claimed in claim 14, **characterised in that** the planar carrier material is a fireproof fabric preferably in form of a linked glass fibre and ceramic fibre fabric.

19. A method as claimed in one of the claims 10 to 13, **characterised in that** the coating of dyed or non-dyed glass beads with a low-melting silicate flux or enamel is performed within a mixing apparatus, whereupon the thus produced doughy mass is introduced into a respective mould, whereupon after performing a heat treatment porous glass elements in form of planar slabs, relief slabs, glass bricks, wall panellings, facade elements and the like are formed.

20. A method as claimed in one of the claims 10 to 13, **characterised in that** the coating of the glass particles with a low-melting silicate flux or enamel is performed within a mixing apparatus, whereupon the thus produced doughy mass is introduced into a hollow space between two flat glass slabs or glass films, as a result of which thermally insulating glass panes are formed after performing the heat treatment.

## Revendications

1. Billes de verre ou granulés de verre coloré avec une bille de verre non colorée en verre recyclé d'un diamètre compris entre 0,1 et 2,3 mm ou une particule de verre granulé recyclé d'un diamètre intérieur compris entre 0,3 et 4mm, dont la surface est humidifiée par un agent de réticulation sous forme d'une huile sérigraphique légèrement bouillonnante, une couche d'encre émail ou de couleur à bas point de fusion de vitrification étant prévue sur la surface amollie sous l'influence de la chaleur, la couche dont la proportion est de 2 à 9% en poids, de préférence entre 3 et 5% en poids, et qui est cuite à des températures allant de 540 à 800° C.

2. Billes de verre selon la revendication 1, **caractérisées en ce que** la couche sur la surface des particules de verre ou des billes de verre encapsulées de verre fini sont texturées de n'importe quelle teinte, notamment aussi avec des peintures à oxyde métallique.

3. Billes de verre selon la revendication 1 ou 2, **caractérisées en ce que** leur granulation ou leur taille de grains existe en calibrage uniforme ou dans une partie éventuellement plus étroite de taille de grains définie.

4. Billes de verre selon la revendication 1 à 3, **caractérisées en ce qu**'elles sont agglutinées (par ex. frittées ou collées) entre elles.

5. Billes de verre selon la revendication 4, **caractérisées en ce que** les billes de verre sont agglutinées (par ex. frittées ou collées) entre elles pour former des objets plus grands, par exemple des plaques.

6. Utilisation des billes de verre selon l'une quelconque des revendications 1 à 3, **caractérisée en ce qu**'elles sont appliquées sur la surface d'un support.

7. Utilisation des billes de verre selon l'une quelconque des revendications précédentes en couches agglutinées, composées de billes de verre agglutinées alternativement (frittées ou collées) et de couches support intercalées entre celles-ci ou sur un côté ou les deux côtés de leur surface, ces couches support étant aussi en matériau métallique ou céramique ou réfléchissant la lumière.

8. Utilisation des billes de verre selon la revendication 7, **caractérisée en ce que** les couches sont structurées de manière poreuse.

9. Utilisation des billes de verre selon la revendication 6 à 8, **caractérisée en ce que** les couches poreuses sont constituées de verre mince avec une percolation de 0,05 à 0,75 mm.

10. Procédé pour l'usinage de petites particules de verre, par ex. sous forme de granulé de verre recyclé avec une taille de grain dans une plage comprise entre 0,3 et 4 mm ou des billes de verre d'un diamètre compris entre 0,1 et 2,3 mm, **caractérisé en ce que** les surfaces des particules de verre, humidifiées avec un agent de réticulation, de préférence sous forme d'une huile sérigraphique légèrement gazéifiante, sont mises en contact avec un bain de silicate ou de l'émail à bas point de fusion, par exemple en borosilicate de plomb, borosilicate de sodium, borosilicate de fluor ou des mélanges de ceux-ci dans des proportions de 2 à 9% en poids, de préférence de 3 à 5% en poids, et **en ce que**, par voie de conséquence, les particules de verre sont soumises à un traitement thermique situé entre 540°C et 800°C, de préférence compris entre 560°C et 660°C, conditions dans lesquelles le bain de silicate ou l'émail à bas point de fusion parvient aux surfaces des particules de verre par liquéfaction.

11. Procédé selon la revendication 10, **caractérisé en ce que** les surfaces des particules de verre sont d'abord traitées, avant leur métallisation avec le bain de silicate ou l'émail, avec un agent de réticulation sous forme d'huile sérigraphique bouillonnante sans résidu, aussi bien avec un acide borique qu'avec un liquide et/ou des mélanges de ceux-ci contenant aussi des sels fluorés.

12. Procédé selon la revendication 10 ou 11, **caractérisé en ce que** le bain de silicate ou l'émail à bas point de fusion contient des pigments colorés, de sorte qu'en liaison avec un traitement thermique et une opération de dispersion sont éventuellement encore nécessaires par pulvérisation ou peinture, de petites particules de verre sous forme de granulés de verre ou de billes de verre se forment avec une couche de couleur cuite sur l'extérieur.

13. Procédé selon la revendication 12, **caractérisé en ce que** le traitement thermique est réalisé au choix dans une atmosphère protectrice oxydante ou réductrice.

14. Procédé selon l'une quelconque des revendications 10 et 13, **caractérisé en ce que** la couche du bain de silicate ou d'émail à bas point de fusion est appliquée sur une ou les deux surfaces d'un matériau plan, **en ce que**, en conséquence, une couche de particules de verre colorées ou non au choix est appliquée dans le cadre d'une opération d'aspersion sur une ou les deux surfaces humidifiées de l'espacement supportant les matériaux, et **en ce qu'**en liaison avec une opération de laminage effectuée un traitement thermique est réalisé, dans lequel il se produit une formation de passerelles adhérentes entre les particules de verre entre elles et la surface de l'espacement supportant les matériaux.

15. Procédé selon la revendication 14, **caractérisé en ce que** l'espacement supportant les matériaux est au choix un verre plat mince ou une feuille de verre flexible.

16. Procédé selon la revendication 14, **caractérisé en ce que** l'espacement supportant les matériaux réside sous forme de carreaux en céramique.

17. Procédé selon la revendication 14, **caractérisé en ce que** l'espacement supportant les matériaux est formé de surfaces métalliques à grande surface de carrosseries de véhicules routiers ou de surfaces de coques ou d'avion.

18. Procédé selon la revendication 14, **caractérisé en ce que** l'espacement supportant les matériaux est un tissu ignifuge, de préférence sous forme d'un tissu de fils de verre ou de fibres céramiques chaînées.

19. Procédé selon l'une quelconque des revendications 10 à 13, **caractérisé en ce que** le revêtement de billes de verre colorées ou non est réalisé avec un bain de silicate ou un émail à bas point de fusion à l'intérieur d'un dispositif mélangeur, sur lequel la masse pâteuse ainsi obtenue est appliquée dans des moules correspondants, sur lesquels, après l'exécution d'un traitement thermique, des éléments de verre poreux sont formés sous forme de plaques plates, de plaques en relief, de pierres en verre, de revêtements muraux, d'éléments de façade/de bardages.

20. Procédé selon l'une quelconque des revendications 10 à 13, **caractérisé en ce que** le revêtement des particules de verre avec un bain de silicate ou d'émail à bas point de fusion est réalisé à l'intérieur d'un dispositif mélangeur, sur lequel la masse ainsi créée est appliquée dans un espace creux entre deux plaques de verre feuilletées ou feuilles de verre, sur lesquelles sont formées des vitres thermo-isolantes après exécution d'un traitement thermique.
